# EUROPEAN PATENT APPLICATION

(11) **EP 2 840 243 A1**
(43) Date of publication of application: **25.02.2015**
(21) Application number: 13775656.5
(22) Date of filing: 03.04.2013
(51) Int. Cl.: F02B 23/06

(54) **COMBUSTION CHAMBER STRUCTURE FOR DIRECT INJECTION ENGINE**

(30) Priority: 10.04.2012 JP 2012089101
(71) Applicant: Isuzu Motors, Ltd., Shinagawa-Ku Tokyo 140-8722 (JP)
(72) Inventor: ISHIBASHI Naoki, Fujisawa-shi Kanagawa 252-0881 (JP); IIJIMA Akira, Fujisawa-shi Kanagawa 252-0881 (JP)
(74) Representative: Schaumburg, Thoenes, Thurn, Landskron, Eckert
(86) International application number: PCT/JP2013/060193
(87) International publication number: WO 2013/154004

(57) **Abstract**

A combustion chamber structure of a direct injection engine is configured in such a manner that smoke, NO, and the like are reduced by a simple change in the shape of a cavity. The combustion chamber structure of a direct injection engine includes a cavity (11) recessed in the center of the top of the piston (10) into which fuel is injected from the injector disposed above the piston (10). The cavity (11) includes a curve section (13) which is provided on the lower part of the side wall (12) of the cavity (11) and which has a vertical cross-sectional shape defined by an arc protruding outward in the radial direction of the piston (10). The cavity also includes a bottom wall straight line section (16) which is provided on the bottom wall (14) of the cavity (11) and which has a vertical cross-sectional shape defined by a straight line. The cavity also includes a bottom wall transition curve section (17) which is provided on the bottom wall (14) of the cavity (11) between the bottom wall straight line section (16) and the curve section (13) and which has a vertical cross-sectional shape defined by a transition curve having a curvature radius continuously changing from the curvature radius of the arc, which defines the vertical cross-sectional shape of the curve section (13), to an infinite value.

## Description

### TECHNICAL FIELD

The present invention relates to a combustion chamber structure of a direct injection engine, with fuel being injected into a cavity recessed in a center area of a top portion of a piston from an injector disposed above the piston.

### BACKGROUND ART

A combustion chamber (cavity) formed in a top portion of a piston of a direct injection diesel engine may have a reentrant shape, a toroidal shape, a shape having a lip, or the like. In general, the combustion chamber structure of the direct injection diesel engine focuses on combustion of the fuel in the cavity. An example of such combustion chamber structure of the direct injection diesel engine is disclosed in, for example, Patent Literature 1 (Japanese Patent Application Laid-Open Publication (Kokai) No. 2011-94496).

### LISTING OF REFERENCE

PATENT LITERATURE 1: Japanese Patent Application Laid-Open Publication (Kokai) No. 2011-94496

### SUMMARY OF THE INVENTION

### PROBLEM(S) TO BE SOLVED BY THE INVENTION

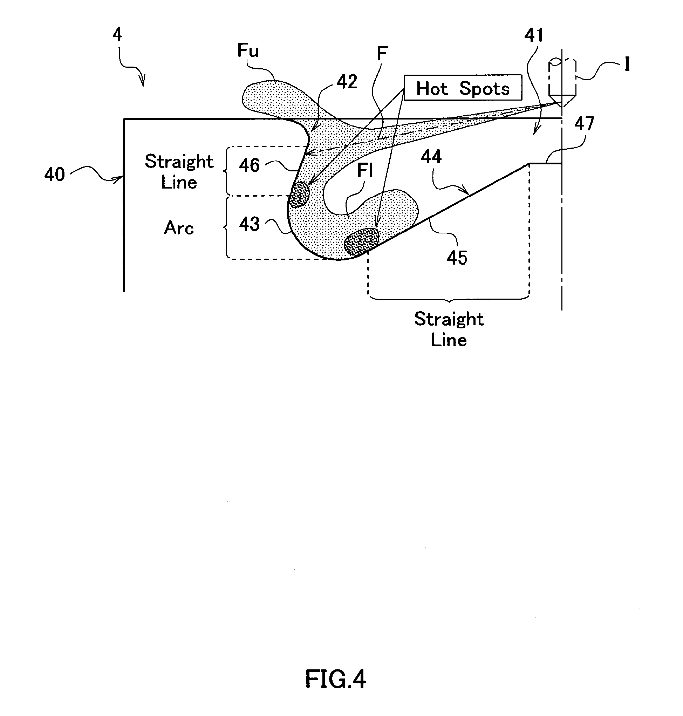

For example, a combustion chamber of a direct injection diesel engine has a structure shown in Fig. 4 of the accompanying drawings.

As shown in Fig. 4, the conventional combustion chamber structure 4 of the direct injection engine has a reentrant cavity (combustion chamber) 41 recessed in a center area of the top portion of the piston 40 of the direct injection diesel engine. The cavity 41 includes a curve section 43 at a lower part of a side wall 42 of the cavity 41. The curve section 43 has a vertical cross-sectional shape defined by an arc curve protruding outward in a radial direction of the piston 40. The cavity 41 also includes a bottom wall straight line section 45 on a bottom wall 44 of the cavity 41. The bottom wall straight line section 45 is continuous from the curve section 43, and has a vertical cross-sectional shape defined by a straight line. The cavity 41 also includes a side wall straight line section 46 at an upper part of the side wall 42 of the cavity 41. The side wall straight line section 46 is continuous from the curve section 43, and has a vertical cross-sectional shape defined by a straight line. The bottom wall 44 of the cavity 41 includes a protruding portion 47 having a shape of a circular truncated cone. The bottom wall straight line section 45 is formed on an inclined surface of the protruding portion 47.

As shown in Fig. 4, when the piston 40 approaches a top dead center of a compression stroke, the fuel is injected toward the side wall 42 (side wall straight line section 46) of the cavity 41 from an injector I. As the injected fuel (referred to as "sprayed fuel" hereinafter) F impinges upon the side wall 42 of the cavity 41, the sprayed fuel F is divided into a sprayed fuel Fl flowing downward along the side wall 42 of the cavity 41 and another sprayed fuel Fu flowing upward along the side wall 42 of the cavity 41.

At the transition from the side wall straight line section 46 to the curve section 43, the radius of curvature steeply changes from the radius of curvature of the straight line (infinite value), which defines the vertical cross-sectional shape of the side wall straight line section 46, to a radius of curvature of the arc (constant value) which defines the vertical cross-sectional shape of the curve section 43. Thus, the flow of the sprayed fuel Fl directed downward stops in a moment at a certain position between the side wall straight line section 46 and the curve section 43. Similarly, at the transition from the curve section 43 to the bottom wall straight line section 45, the radius of curvature steeply changes from the radius of curvature of the arc (constant value), which defines the vertical cross-sectional shape of the curve section 43, to the radius of curvature of the straight line (infinite value) which defines the vertical cross-sectional shape of the bottom wall straight line section 45. Thus, the flow of the sprayed fuel Fl directed inward of the radial direction of the piston 40 stops in a moment at a certain position between the curve section 43 and the bottom wall straight line section 45. When the flow of the sprayed fuel Fl stops at a certain position, the fuel concentration increases at that position, and therefore smoke, NO (nitrogen monoxide) and other gas are generated. Therefore, it is important not to stop the flow of the sprayed fuel Fl in the cavity 41.

As described above, the conventional combustion chamber structure 4 of the direct injection engine shown in Fig. 4 may create hot spots at which smoke, NO and other gas are generated more than other positions in the combustion chamber (cavity).

An object of the present invention is, therefore, to provide a combustion chamber structure of a direct injection engine that can reduce smoke, NO and other gas by a simple change made to a shape of a cavity.

### SOLUTION TO OVERCOME THE PROBLEM(S)

In order to achieve the above-mentioned object, one aspect of the present invention provides a combustion chamber structure of a direct injection engine that includes a cavity recessed in a center area of a top portion of a piston. Fuel is injected into the cavity from an injector disposed above the piston. The cavity includes a curve section at a lower part of a side wall of the cavity. The curve section has a vertical cross-sectional shape defined by an arc (arc curve) which protrudes outward in a radial direction of the piston. The cavity also includes a bottom wall straight line section on a bottom wall of the cavity. The bottom wall straight line section has a vertical cross-sectional shape defined by a straight line. The cavity also includes a bottom wall transition curve (gentle curve) section on the bottom wall of the cavity between the bottom wall straight line section and the curve section. The bottom wall transition curve section has a vertical cross-sectional shape defined by a transition curve (gentle curve). The radius of curvature of the transition curve continuously changes from the radius of curvature of the arc, which defines the vertical cross-sectional shape of the curve section to an infinite value.

The transition curve that defines the vertical cross-sectional shape of the bottom wall transition curve section may be a clothoid curve, a cubic curve or a sine-half-wavelength transition curve.

The cavity may further include a protruding section on the bottom wall of the cavity. The bottom wall straight line section and the bottom wall transition curve section may be formed on an inclined face of the protruding section.

The cavity may include a side wall straight line section at an upper part of the side wall of the cavity. The side wall straight line section may have a vertical cross-sectional shape defined by a straight line. The cavity may also include a side wall transition curve section on the side wall of the cavity between the side wall straight line section and the curve section. The side wall transition curve section has a vertical cross-sectional shape defined by a transition curve (gentle curve). The radius of curvature of the transition curve continuously changes from an infinite value to the radius of curvature of the arc, which defines the vertical cross-sectional shape of the curve section.

The transition curve that defines the vertical cross-sectional shape of the side wall transition curve section may be a clothoid curve, a cubic curve or a sine-half-wavelength transition curve.

### ADVANTAGE(S) OF THE INVENTION

The present invention has a remarkable advantage, i.e., the combustion chamber structure of the direct injection engine can reduce smoke, NO and other gas by a simple change made to the cavity shape,.

### BRIEF DESCRIPTION OF THE DRAWINGS

Fig. 1 is a partial vertical cross-sectional view of a piston, showing a combustion chamber structure (reentrant type cavity) of a direct injection engine according to one embodiment of the present invention.
Fig. 2 is a partial vertical cross-sectional view of a piston, showing a combustion chamber structure (toroidal type cavity) of a direct injection engine according to another embodiment of the present invention.
Fig. 3 is a partial vertical cross-sectional view of a piston, showing a combustion chamber structure (cavity with a lip) of a direct injection engine according to still another embodiment of the present invention.
Fig. 4 is a partial vertical cross-sectional view of a piston, showing a conventional combustion chamber structure (reentrant type cavity) of a direct injection engine.

### MODE FOR CARRYING OUT THE INVENTION

A preferred embodiment of the present invention will now be described in detail with reference to the accompanying drawings.

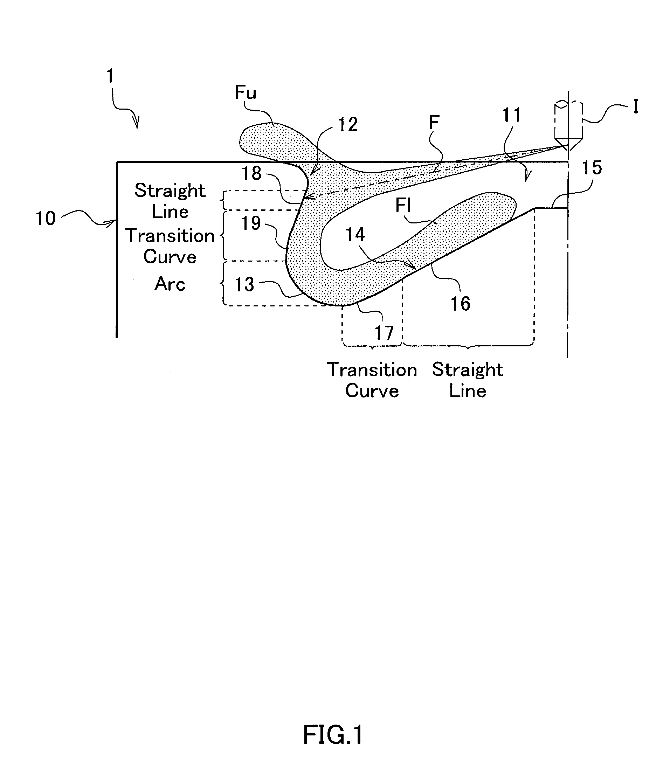

As shown in Fig. 1, a combustion chamber structure 1 of a direct injection engine according to this embodiment has a cavity (combustion chamber) 11, which is recessed in a center area of an upper part of a piston 10 of a direct injection diesel engine. Fuel is injected into the cavity 11 from an injector I disposed above the piston 10. In this embodiment, the cavity 11 has a shape that is called a reentrant type.

The combustion chamber structure 1 of the direct injection engine according to this embodiment has a curve section (recess portion) 13 at a lower part of a side wall 12 of the cavity 11, and a protruding section (center protrusion) 15 on a bottom wall 14 of the cavity 11. The curve section 13 extends to a lower end of the side wall 12 of the cavity 11 from a position a predetermined height below an upper end of the side wall 12 of the cavity 11. The curve section 13 has a vertical cross-sectional shape that is defined by an arc (arc curve) protruding outward in a radial direction of the piston 10. The arc that defines the vertical cross-sectional shape of the curve section 13 has a constant radius of curvature for its entire curvature. It should be noted that the protruding section 15 has a circular truncated cone shape in this embodiment, but the shape of the protruding section 15 is not limited to the circular truncated cone.

The combustion chamber structure 1 of the direct injection engine according to this embodiment also has a bottom wall straight line section (linear section) 16 and a bottom wall transition curve section 17 on the bottom wall 14 of the cavity 11. The combustion chamber structure 1 of the direct injection engine according to this embodiment also has a side wall straight line section (linear section) 18 and a side wall transition curve section 19 on the side wall 12 of the cavity 11.

The bottom wall straight line section 16 extends in a radially inward area on the bottom wall 14 of the cavity 11. The bottom wall straight line section 16 has a vertical cross-sectional shape defined by a straight line. In other words, the straight line that defines the vertical cross-sectional shape of the bottom wall straight line section 16 has an infinite radius of curvature for its entire length. In this embodiment, the bottom wall straight line section 16 is formed on an inclined surface of the protruding section 15.

The bottom wall transition curve section 17 extends on the bottom wall 14 of the cavity 11 between the bottom wall straight line section 16 and the curve section 13. The bottom wall transition curve section 17 has a vertical cross-sectional shape that is defined by a transition curve (gentle curve), and the radius of curvature of the transition curve successively changes from the radius of curvature (constant value) of the arc that defines the vertical cross-sectional shape of the curve section 13 to the radius of curvature (infinite value) of the straight line that defines the vertical cross-sectional shape of the bottom wall straight line section 16. In other words, the transition curve that defines the vertical cross-sectional shape of the bottom wall transition curve section 17 has a radius of curvature that gradually increases from the curve section 13 toward the bottom wall straight line section 16 for its entire curvature. In this embodiment, the bottom wall transition curve section 17 is formed on the included surface of the protruding section 15.

The transition curve that defines the vertical cross-sectional shape of the bottom wall transition curve section 17 is, for example, a clothoid curve. It should be noted that the transition curve that defines the vertical cross-sectional shape of the bottom wall transition curve section 17 is not limited to the clothoid curve, and the transition curve may be a cubic parabola (cubic curve) or a sine curve (sine-half-wavelength transition curve).

The side wall straight line section 18 extends in an upper part of the side wall 12 of the cavity 11. The side wall straight line section 18 has a vertical cross-sectional shape that is defined by a straight line. Thus, the straight line that defines the vertical cross-sectional shape of the side wall straight line section 18 has an infinite radius of curvature for its entire length.

The side wall transition curve section 19 extends on the side wall 12 of the cavity 11 between the side wall straight line section 18 and the curve section 13. The side wall transition curve section 19 has a vertical cross-sectional shape that is defined by a transition curve (gentle curve). The radius of curvature of the transition curve successively changes from the radius of curvature (infinite value) of the straight line that defines the vertical cross-sectional shape of the side wall straight line section 18 to the radius of curvature (constant value) of the arc that defines the vertical cross-sectional shape of the curve section 13. In other words, the transition curve that defines the vertical cross-sectional shape of the side wall transition curve section 19 has a radius of curvature that gradually decreases from the side wall straight line section 18 to the curve section 13 for its entire curvature.

The transition curve that defines the vertical cross-sectional shape of the side wall transition curve section 19 is, for example, a clothoid curve. It should be noted, however, that the transition curve that defines the vertical cross-sectional shape of the side wall transition curve section 19 is not limited to the clothoid curve, and the transition curve may be a cubic parabola (cubic curve) or a sine curve (sine-half-wavelength transition curve).

The operation and advantages of the combustion chamber structure 1 of the direct injection engine according to this embodiment will be described.

As shown in Fig. 1, when the piston 10 ascends to the vicinity of the top dead center of a compression stroke, the injector I injects the fuel toward the side wall 12 (side wall straight line section 18) of the cavity 11. As the injected fuel (referred to as "sprayed fuel" hereinafter) F impinges upon the side wall 12 of the cavity 11, the sprayed fuel F is divided into a sprayed fuel Fl flowing downward along the side wall 12 of the cavity 11, and another sprayed fuel Fu flowing upward along the side wall 12 of the cavity 11.

In the combustion chamber structure 1 of the direction injection engine according to this embodiment, the side wall transition curve section 19 is provided on the side wall 12 of the cavity 11 between the side wall straight line section 18 and the curve section 13. At the transition from the side wall straight line section 18 to the curve section 13 via the side wall transition curve section 19, the radius of curvature of the side wall transition curve section 19 continuously changes from the radius of curvature (infinite value) of the straight line that defines the vertical cross-sectional shape of the side wall straight line section 18 to the radius of curvature (constant value) of the arc that defines the vertical cross-sectional shape of the curve section 13. Therefore, the flow of the sprayed fuel Fl does not stop between the side wall straight line section 18 and the curve section 13, i.e., the sprayed fuel Fl flows to the curve section 13 from the side wall straight line section 18 via the side wall transition curve section 19.

In the combustion chamber structure 1 of the direction injection engine according to this embodiment, the bottom wall transition curve section 17 is provided on the bottom wall 14 of the cavity 11 between the bottom wall straight line section 16 and the curve section 13. At the transition from the curve section 13 to the bottom wall straight line section 16 via the bottom wall transition curve section 17, the radius of curvature of the bottom wall transition curve section 17 continuously changes from the radius of curvature (constant value) of the arc that defines the vertical cross-sectional shape of the curve section 13 to the radius of curvature (infinite value) of the straight line that defines the vertical cross-sectional shape of the bottom wall straight line section 16. Therefore, the flow of the sprayed fuel Fl moves, without stopping, to the bottom wall straight line section 16 from the curve section 13 via the bottom wall transition curve section 17.

In this manner, the flow of the sprayed fuel Fl does not stop in the cavity 11, and therefore it is possible to suppress or prevent hot spots from being generated. The hot spots would otherwise be generated because of a fuel concentration increased at positions where the flow of the fuel stops. In the hot spots, smoke, NO and other gas would be generated more than other positions. The combustion chamber structure 1 of the direction injection engine according to this embodiment, therefore, can reduce smoke, NO and other gas by a simple change in the shape of the cavity 11 (by providing the bottom wall transition curve section 17 and the side wall transition curve section 19). Because the flow of the sprayed fuel Fl does not stop in the cavity 11, it is possible to effectively use the air (oxygen) in the center area of the cavity 11. This also contributes to reduction of smoke, NO and other gas.

Because the influence exerted on the flow of the sprayed fuel Fl by the wall segment between the side wall straight line section 18 and the curve section 13 is smaller than the influence exerted on the flow of the sprayed fuel Fl by the wall segment between the bottom wall straight line section 16 and the curve section 13, the side wall transition curve section 19 to be provided between the side wall straight line section 18 and the curve section 13 may be dispensed with, when a certain shape is used for the cavity 11.

The foregoing deals with a preferred embodiment of the present invention. It should be noted that the present invention is not limited to the above-described embodiment, and can be practiced in various other embodiments.

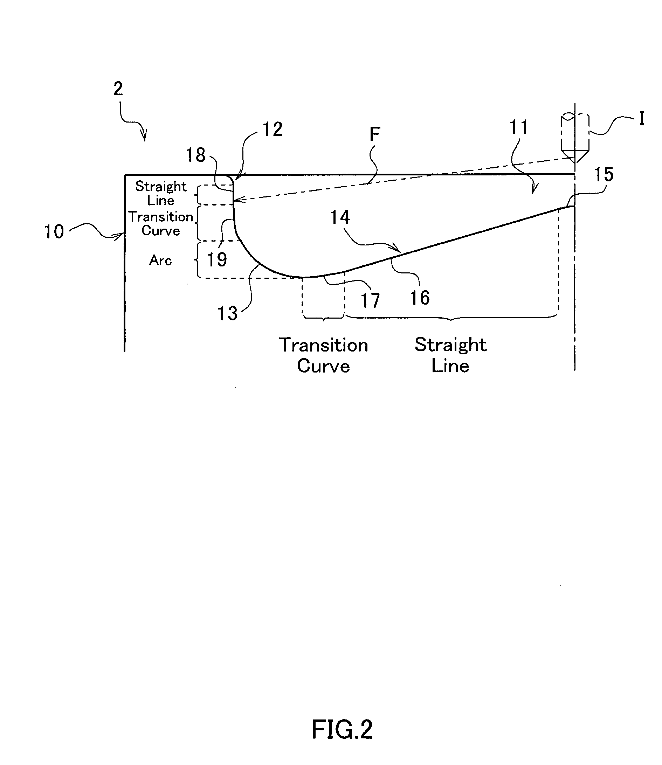

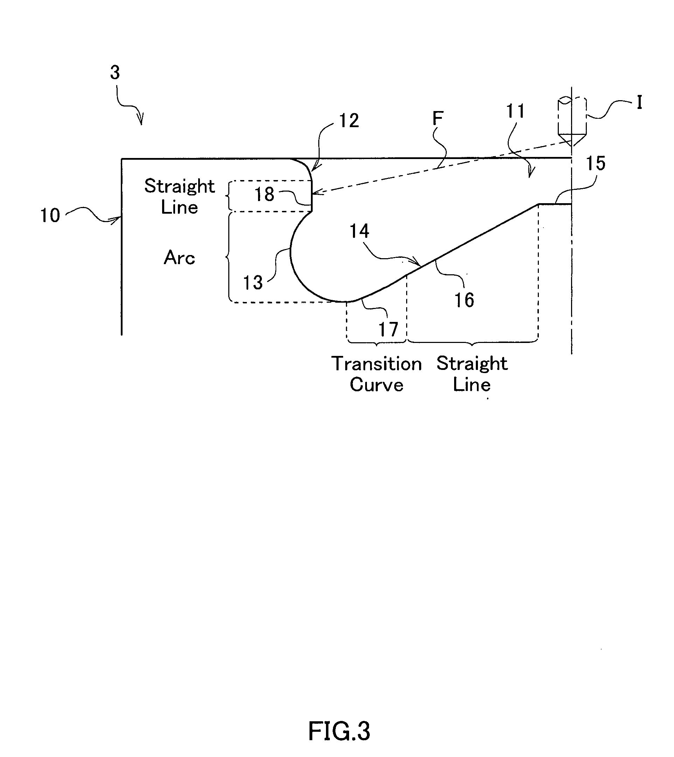

For example, the shape of the cavity 11 is not limited to the reentrant type. The shape of the cavity 11 may be a toroidal shape or a cavity that has a lip. Fig. 2 illustrates a combustion chamber structure 2 when the cavity 11 has a toroidal shape, and Fig. 3 illustrates a combustion chamber structure 3 when the cavity 11 has a lip. Those components in Figs. 2 and 3 which are substantially the same as those illustrated in Fig. 1 are assigned the same reference numerals and symbols as the components illustrated in Fig. 1.

Also, the direct injection engine is not limited to the direct injection diesel engine. The direct injection engine may be a direct injection gasoline engine.

### EXPLANATIONS OF REFERENCE NUMERALS

- 1: combustion chamber structure
- 2: combustion chamber structure
- 3: combustion chamber structure
- 10: piston
- 11: cavity
- 12: side wall
- 13: curve section (recess portion)
- 14: bottom wall
- 15: protruding section (center protrusion)
- 16: bottom wall straight line section
- 17: bottom wall transition curve section
- 18: side wall straight line section
- 19: side wall transition curve section
- I: injector

## Claims

1. A combustion chamber structure of a direct injection engine, comprising:
a cavity recessed in a center area of a top portion of a piston, with fuel being injected into the cavity from an injector disposed above the piston, the cavity including:
a curve section at a lower part of a side wall of the cavity, the curve section having a vertical cross-sectional shape defined by an arc which protrudes outward in a radial direction of the piston;
a bottom wall straight line section on a bottom wall of the cavity, the bottom wall straight line section having a vertical cross-sectional shape defined by a straight line; and
a bottom wall transition curve section on the bottom wall of the cavity between the bottom wall straight line section and the curve section, the bottom wall transition curve section having a vertical cross-sectional shape defined by a transition curve, with a radius of curvature of the transition curve continuously changing from a curvature radius of the arc that defines the vertical cross-sectional shape of the curve section to an infinite value.

2. The combustion chamber structure of a direct injection engine according to claim 1, wherein the transition curve that defines the vertical cross-sectional shape of the bottom wall transition curve section includes a clothoid curve, a cubic curve or a sine-half-wavelength transition curve.

3. The combustion chamber structure of a direct injection engine according to claim 1 or 2, wherein the cavity further includes a protrusion at the bottom wall of the cavity, and the bottom wall straight line section and the bottom wall transition curve section are provided on an inclined face of the protrusion.

4. The combustion chamber structure of a direct injection engine according to any one of claims 1 to 3, wherein the cavity further includes:
a side wall straight line section at an upper part of the side wall of the cavity, the side wall straight line section having a vertical cross-sectional shape defined by a straight line; and
a side wall transition curve section on the side wall of the cavity between the side wall straight line section and the curve section, the side wall transition curve section having a vertical cross-sectional shape defined by a transition curve, with a radius of curvature of the transition curve continuously changing from an infinite value to the curvature radius of the arc that defines the vertical cross-sectional shape of the curve section.

5. The combustion chamber structure of a direct injection engine according to claim 4, wherein the transition curve that defines the vertical cross-sectional shape of the side wall transition curve section includes a clothoid curve, a cubic curve or a sine-half-wavelength transition curve.
